# EUROPEAN PATENT SPECIFICATION

(11) **EP 3 620 334 B1**
(45) Date of publication and mention of the grant of the patent: **12.05.2021**
(21) Application number: 18192641.1
(22) Date of filing: 05.09.2018
(51) Int. Cl.: B60T 13/74, B60T 13/58, B60T 17/08, F16D 65/28, F16D 65/38, F16D 66/02, F16D 121/08, F16D 121/24, F16D 127/06, F16D 129/08

(54) **BRAKE ACTUATOR FOR A COMMERCIAL VEHICLE AND BRAKE SYSTEM THEREWITH**
BREMSBETÄTIGUNGSVORRICHTUNG FÜR EIN NUTZFAHRZEUG UND BREMSSYSTEM DAMIT
ACTIONNEUR DE FREIN POUR UN VÉHICULE UTILITAIRE ET SYSTEME DE FREINAGE EQUIPE D'UN TEL ACTIONNEUR

(43) Date of publication of application: 11.03.2020
(73) Proprietor: WABCO Europe BVBA, 1170 Brüssel (BE)
(72) Inventor: Kocjan, Tomasz, 44-217 RYBNIK (PL); Szuberski, Oktawian, 54-129 Wroclaw (PL); Zbylut, Michal, 42-400 Zawiercie (PL)
(74) Representative: Copi, Joachim

(56) References cited:
- DE-A1- 19 906 227
- DE-A1-102009 014 339
- DE-A1-102010 019 603
- US-A1- 2018 031 065

## Description

The invention relates to a brake actuator for a commercial vehicle.

Brake actuators of the aforementioned type are used to provide a plurality of braking functions for the associated vehicle. One of the required braking functions is a so-called parking brake function, also referred to as hand brake function. In prior art systems, a brake actuator typically comprises a spring brake portion having a very stiff compressed steel spring which is held in a compressed state by positive pressure in a pressure chamber. When the pressure in the pressure chamber is released, either deliberately or due to a malfunction, the steel spring rapidly decompresses and pushes an associated piston from a retracted position towards an extended position, leading to an application of braking force to a brake mechanism. These prior art systems are in general very useful and have long been established as state of the art solutions in the market. However, due to the high amount of energy stored in the steel springs in the compressed state, a certain safety risk is always involved when the housing inadvertently comes apart. Also, the prior art brake actuators are comparatively heavy and consume a lot of space in the stroke direction of the actuator. Also, it has been observed that a significant amount of compressed air is necessary to provide the pneumatic braking functions for the prior art braking systems. Generation, preparation, storage and transmission of compressed air between a compressor and the actuator is expensive and leaves room for optimization.

DE 10 2010 019603 A1 discloses a brake actuator which is built as an electromechanical tensioning device for vehicle brakes, having a piston comprising a piston rod for clamping and releasing a brake mechanism and disposed in a spring brake cylinder of the brake mechanism and that can be actuated by at least one spring implemented as a coil spring, and comprising an electric motor for tensioning and/or relieving the accumulator spring. The piston is configured to reciprocate along a stroke axis between a retracted position and an extended position for applying and releasing a braking force to and from the brake mechanism of the vehicle.

DE 199 06 227 A1 relates to a brake actuator with a brake cylinder, comprising a spring which can be brought under tension by a drive mechanism and which serves to operate a piston, allowing the brake to be applied and released. The drive mechanism comprises an electric motor and a gear that is serial connected to the electric motor, in addition to a controllable holding device for holding the spring under tension. The holding device also has a brake which can be released mechanically and/or electromagnetically to create a mechanical braking force.

DE 10 2009 014339 A1 shows an electromechanical brake actuator for a motor vehicle, which has a brake disk, a brake caliper fitting around the brake disk, and two brake pads, which rest against the brake disk for the purpose of braking. One of the brake pads can be moved by a motor-driven ball screw which has a threaded spindle and a threaded nut. The ball screw is accommodated within the brake caliper. The threaded nut is connected to a piston which has the brake pad and which is seated on the threaded nut in such a way that it can be tilted relative to the threaded nut, and/or wherein the threaded spindle is mounted on the brake caliper in such a way that it can be tilted relative to the brake caliper. The nut has a convex shape front side which faces the piston to ensure a proper contact with the piston if the piston is pivoted away from a stroke axis of the electromechanical brake actuator. The piston can therefore tilt relative to the threaded nut and a movable bearing arrangement is achieved, with lubrication by means of a suitable lubricant to reduce friction.

US 2018 / 031065 A1 relates to an electromechanical brake actuator includes a structure defining a housing, a member that rotates with a wheel, an electric motor mounted to the structure, a reciprocating piston, a brake pad, and a controller. The piston is driven by the electric motor between a variable actuated position and a retracted position. The controller controls reciprocation of the piston between the actuated and retracted positions via energization of the electric motor, performs a brake pad wear check by calculating a change in a parameter associated with a change in distance between positions, and compares the change in parameter to a threshold value.

In view of the aforementioned, it was an object of the invention to provide an improved brake actuator which overcomes the challenges of the prior art in the best manner possible. In particular, it was an object of the invention to provide an improved brake actuator which has better efficiency in use of resources, weight and size, and which preferably is more cost efficient.

The invention obtains this object by suggesting a brake actuator according to claim 1. In particular, the brake actuator according to the invention comprises a housing, a piston that is movably mounted inside the housing and configured to reciprocate along a stroke axis between a retracted position and an extended position for applying and releasing a braking force to and from a brake mechanism of the vehicle, and an electric motor that is operatively coupled to the piston and configured to move the piston rod between the retracted and extended positions such as to apply and release the braking force.

The electric motor is coupled to a screw drive, and the screw drive is coupled to the piston and configured to transfer a rotational drive movement of the electric motor into the movement of the piston. A particular advantage of the screw drive is that it can be integrated into the actuator housing while at the same time consuming very little space. Particularly preferred, the screw drive is mounted coaxially inside a rod of the brake piston such that the screw drive does not impact the size of the brake actuator in the stroke direction. The term "screw drive" is understood to encompass spindle gears as well as ball-screw gears and the like.

A particular advantage of providing the actuating force for the brake actuator with an electric motor is that by virtue of a rotating drive shaft of the electric motor, very precise control of the actuator is made possible. An electric motor comprising a rotating drive shaft which supplies a torque to the screw drive is considered to be superior over direct electromagnetic coil actuators which translate an electromagnetic field change into an axial movement, because the latter are more limited in terms of the available stroke length. With a rotating electric motor, the stroke length is in principle not limited. The drive mechanism can perpetually rotate as long as volt supply is provided.

The screw drive comprises a rotating element and a nut, wherein the rotating element and the nut are in thread engagement, wherein one of the rotating element or the nut rests against the piston. The rotating element preferably is a spindle or a screw which is supportable in the housing in the direction of the stroke axis, and is rotatable acted upon by the electric motor. The screw drive preferably is a spindle gear or a ball screw gear. Spindle gears are preferred for high-torque motors. Ball screw gears are preferred for use whenever particularly high efficiency is needed for the transfer of torque to the axial force, since the balls interposed between the rotating element and the nut significantly reduce friction and thus allow for the use of a minimized electric motor.

The rotating element is rotatable mounted in the housing, and the nut is a running nut that is movably mounted to the rotating element and rests against the piston. By having the nut move the piston instead of the spindle, the amount of moving mass is reduced in the brake actuator which is considered particularly advantageous, particular for use in a moving vehicle.

The piston is slidably supported in the housing, configured to move along the stroke axis and to pivot from the stroke axis within a pre-determined angle. This is understood to mean that the piston has a neutral position in which for example a planar piston head would be perpendicular to the stroke axis, and wherein a rod of the piston would be parallel, in particular coaxial, to the stroke axis. If the piston pivots away from its neutral position, it is allowed to do so within a predetermined angle to account for lateral movements imposed by the externally mounted brake mechanism. A pivotable piston, also referred to as rocking piston, is generally beneficial due to its tolerance to its mechanical misalignments, but is more demanding to control. The electric motor and its coupling to a screw drive ideally complements the pivoting movements of the piston head, since the nut is only required to rest against the piston, regardless of its angular alignment. The piston is preferably configured to pivot in an articulation range of +/- 5 to +/- 15 degrees.

In a preferred embodiment, the rotating element comprises a rotational axis that is parallel to, and in particular coaxial with, the stroke axis and the nut is driven along the rotational axis by rotation of the rotating element.

The nut comprises an end face that faces the piston and comprises a convexly shaped surface portion. By providing a convexly shaped surface portion, the piston is allowed to scroll along the convexly shaped service portion when moving at an inclination angle within the aforementioned predetermined range to the stroke axis. The convex shape ensures a proper surface contact between the nut and the piston such that force transfer can efficiently take place to provide the braking force needed.

In a first preferred alternative, the convexly shaped portion has a cylindrical shape to facilitate a planar pivoting movement of the piston. Preferably, the cylindrical shape is developed with respect to a cylinder axis that runs perpendicular to the stroke axis. In a second preferred alternative, the convexly shaped portion has a spherical shape to facilitate a three-dimensional pivoting movement of the piston.

Preferably, the piston comprises a correspondingly shaped concave surface portion which accommodates the convexly shaped surface portion of the nut to ensure a proper positioning of the piston and not with respect to one another. According to a further preferred embodiment, the electric motor is coupled to the screw drive by one of: a toothed gear drive, a belt drive, a chain drive, a planetary gear, a worm gear, or a combination of at least two of the aforementioned. The belt drive preferably is a tooth belt drive.

In a further preferred embodiment, the brake actuator comprises a number of guide elements that are located in the housing, oriented parallel to the rotational axis of the rotating element, and engage the nut to prevent rotation of the nut. In other words, the guide elements are positioned in parallel to the stroke axis of the piston and force the nut to move along the rotating element, i.e. spindle or screw, without own rotation. This improves the efficiency of the force transfer in the direction of the stroke axis. Preferably, the guide elements prevent rotation of the nut in a clockwise direction as well as in the counter clockwise direction.

In a further preferred embodiment, the housing of the brake actuator comprises a first chamber, preferably a pressure chamber, and a second chamber, preferably a non-pressure chamber, wherein the first chamber and the second chamber are sealed against and separated from one another by the piston.

In the non-pressure chamber, preferably there is a return spring which is operatively coupled to the piston and configured to move the piston towards the retracted position.

The first (pressure) chamber preferably comprises a port for connecting the pressure chamber to a pressure source: This enables the brake actuator to be actuated either purely electrically, in a hybrid-mode by using pneumatic and electric actuation force, or exclusively pneumatically. As will be commented on further herein below, this enables specific functions of the brake actuator to be either carried out electrically, pneumatically or pneumatically with electrical assistance (or vise versa).

The brake actuator further preferably comprises at least one of: a check valve communicating with the second (non-pressure) chamber to reduce positive pressure inside the second (non-pressure) chamber when the piston moves towards the extended position, or a return valve, preferably mounted to the piston, to compensate negative pressure building up inside the second (non-pressure) chamber when the piston moves towards the retracted position. In this, a positive pressure is understood to mean any pressure above and environmental pressure, whereas negative pressure is understood to encompass any pressure below environmental pressure.

The brake actuator of the aforementioned type is particularly beneficial in use when the parking brake function is carried out by the electric motor. For reliably providing the parking brake functionality, the brake actuator does not need to be extremely fast. Significant force, however, needs to be transmitted to the braking mechanism to ensure a standstill of the vehicle in all situations. This is where the advantages of the electric motor come into play.

In return, the service brake function may beneficially be provided or assisted by pneumatic pressure in the pressure chamber to take advantage of the high responsiveness of pneumatic actuator systems.

The invention has herein above been described in a first aspect with regard to the brake actuator itself.

In a second aspect, which is at the same time a preferred embodiment of the brake actuator and an inventive aspect of its own, the invention also relates to a brake system of a vehicle, in particular commercial vehicle. The invention solves its object with respect to the brake system that the brake system comprises a brake actuator according to one of the preferred embodiments subscribed herein above, a brake mechanism operatively coupled to the brake actuator, and an electronic control unit operatively coupled to the brake actuator.

Preferably, the electronic control unit is configured to control the brake actuator such that the electric motor actuates the piston when at least one of: a parking brake function or a service brake function is activated.

As mentioned above, the electric motor preferably is exclusively responsible for carrying out the parking brake function. Alternatively, it is preferred if the electric motor is assisted by pneumatic pressure face into the pressure chamber to carry out the parking brake function or the service brake function. In a further preferred alternative, it is the other way around the pneumatic pressure system is assisted by the electric motor to carry out the service brake function (or the parking brake function). In a further preferred alternative, the electric motor is exclusively responsible for carrying out the service brake function. In a further alternative, the electric motor is exclusively responsible for carrying out the parking brake function, whereas the service brake function of the brake actuator is exclusively carried out pneumatically.

In a further preferred embodiment of the brake system, the brake mechanism comprises at least one brake pad that is subject to wear and a wear sensor operatively coupled to the electronic control unit an configured to measure the wear of the brake pad and to provide a single representative of the wear adjustment, wherein the electronic control unit is configured to control the electric motor of the brake actuator such as to adjust at least one of the retracted and extended positions of the piston as a function of the signal representative of the wear measurement.

In a further preferred embodiment, the piston of the brake actuator has a maximum stroke length that is defined by the retracted position and the extended position, and wherein the brake actuator is configured to communicate to the electronic control unit a signal representative of the maximum stroke length. The maximum stroke length will increase with the degree by which the brake pad is worn out. Since the brake pad is becoming thinner and thinner over its life span, the amount of travel necessary until the brake pad reaches its counterpart e.g. a brake disc, increases. Therefore, obtaining a signal directly representative of the maximum stroke length is a reliable indicator for brake pad wear for the vehicle system. This information can be used either individually or in addition to the information provided by a wear sensor to verify the respective results of the other system.

The signal provided is preferably a data value for a number of revolutions of a rotating actuator part, e.g. the drive shaft of the electric motor, the spindle of the screw drive et cetera. Alternatively or additionally, the signal is a data value for a time interval that passes while the piston moves from the retracted position to the extended position. Provided that the electric motor operates at a constant rotational speed, the time that lapses between the two end positions of the actuator is also a reliable indicator for the amount of travel, given that the thread pitch of the screw drive is typically known. Also, the gear racial in between the electric motor and the piston or running nut is also known.

In a further preferred embodiment of the invention, the brake actuator comprises a locking unit that is operatively coupled to the belt drive and configured to switch between a locked position and a release position, wherein in the locked position, the locking unit is configured to prevent backwards rotation of the belt drive. The locking unit preferably comprises a trigger that is configured to pivot between the locked position and the release position, wherein in the locked position, the trigger engages at least one recess or protrusion provided on the belt drive, particularly preferred on the toothed wheel of the belt drive. The recess or protrusion is preferably defined by one or more teeth on the toothed wheel. The trigger is preferably actuated by an electromagnetic actuator to pivot between the locked and the release position. In order to enable a mechanical release of the locking unit, the brake actuator preferably comprises a latch that is operatively coupled to the trigger and manually accessible, and configured to pivot the trigger from the locked position into the release position. The latch is positioned separately to the electromagnetic actuator and accessible manually, e.g. with a screwdriver or comparable elongate, thin tool or rod.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could reliably be made without departing from the scope of the invention, as defined by the claims. It is therefore intended that the invention may not be limited to the exact form and detail shown and described herein, nor to anything less than the whole of the invention disclosed herein and disclaimed herein after. In particular, any references signs in the claims shall not be construed as limiting the scope of the invention. The word "comprising" does not exclude other elements or steps. The word "a" or "an" does not exclude a plurality.

In brief, the figures to which reference will be made show:
- Fig. 1:: a schematic 3-dimensional view of a brake actuator according to a preferred embodiment, and
- Fig. 2:: a schematic planar cross-sectional view of the brake actuator of figure 1, and
- Fig. 3 to 5: schematic detail views of a locking unit of the brake actuator of figs. 1 and 2.

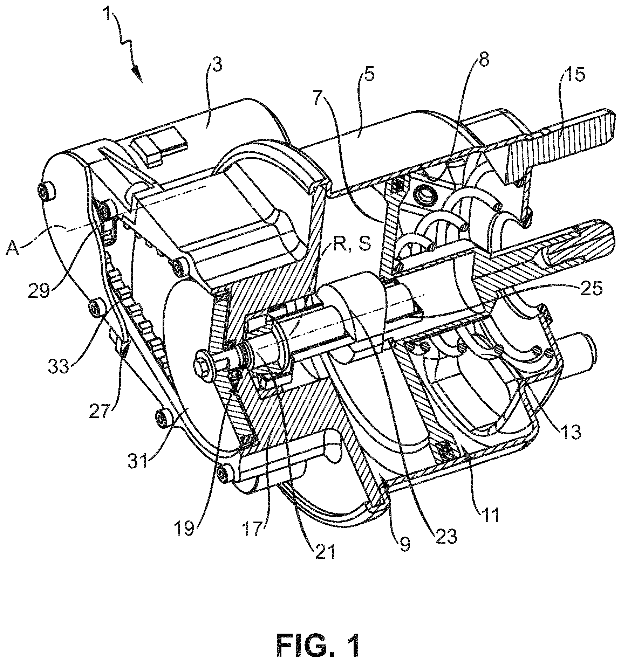

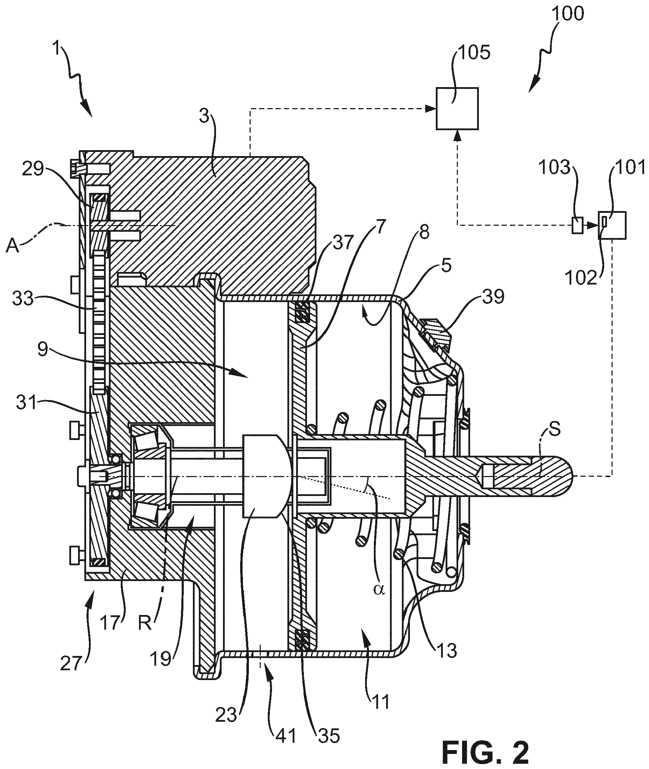

The first of two figures shows a brake actuator 1 in accordance with a preferred embodiment. The brake actuator 1 comprises an electric motor 3 which is attached to a housing 5 and preferably housed integrally therewith. Inside the housing, a piston 7 is mounted for reciprocal movement between a retracted position (to the left in figures 1 and 2) and an extended position (towards the right in figures 1 and 2). The piston 7 sealingly abuts against an inside wall 8 of the housing 5 and separates a first chamber 9 from a second chamber 11.

In the second chamber 11, a return spring 13 is mounted and effective to move the piston 7 towards the retracted position.

The housing 5 of the brake actuator can be mounted to a wheel assembly of a vehicle by using bolts 15 or other suitable fastening elements.

Mounted to the housing 5 is a drive head 17 that houses a screw drive 19. The screw drive 19 comprises a rotatably mounted spindle 21 and a nut 23. The nut 23 and the spindle 21 engage one another with correspondingly shaped male and female threads, respectively. For ease of legibility, the threads are not shown. The nut 23 is prevented from rotational movement by a pair of guide elements 25 aligned in parallel to a rotational axis R of the screw drive 19. The rotational axis R in figure 1 is also coaxial to the stroke axis S of the piston 7.

The screw drive 19 is coupled to the electric motor 3 by a belt drive 27. The belt drive 27 comprises a tooth pinion 29 coupled directly to the drive shaft (not shown) of the electric motor 3, a tooth wheel 31 coupled to the spindle 21 and a tooth belt 33 connecting the tooth pinion 29 and the tooth wheel 31. The drive shaft of the electric motor 3 has an axis A that is oriented parallel to the rotation axis R, i.e. stroke axis S of the piston 7. As can be seen from the figures, the layout of the entire belt drive 27 and screw gear 19 is very compact in the direction of axis R. As can in particular be seen from figure 2, the nut 23 comprises an end face 35 having a convexly shaped surface portion 25. The convexly shaped surface portion 25 may be of a cylindrical shape or a spherical shape. The convex shape of the surface portion 25 ensures that even when the piston 7 is pivoted away from the stroke axis at an inclination angle α, proper contact between the nut 23 and the piston 7 is still ensured, as long as the inclination angle is within a pre-determined range.

In the peripheral region of the piston 7, a radially expandable sealing element 37 is positioned such that it sealingly abuts against the inside wall 8 of housing 5. The elasticity of the sealing element 37 preferably is such that as long as the pivoting angle α of the piston 7 with respect to the stroke axis S is within the pre-determined range, the sealing element 37 still sealingly abuts against the sealing wall 8 of the housing 5.

During movement of the piston 7, the volume in particular of the second chamber 11 will decrease or increase, depending on the direction of movement of the piston 7. If the piston 7 is moved towards the extended position (right side in figure 2), the volume in the second chamber 11 decreases and positive pressure may build up. To prevent this from impeding the piston movement, the housing 5 comprises a check valve 39 for venting positive pressure from the second chamber 11.

In a preferred embodiment, the actuator 1 may additionally comprise a pressure port 41 configured to establish a fluid connection to a pressure source. Doing so turns the first chamber 9 into a pressure chamber. Thus, piston movement may selectively effected electrically, pneumatically or electro-pneumatically. The pressure port is schematically depicted on a sidewall of the brake actuator 1. It is to be understood that the pressure port may alternatively be located on another part of the brake actuator, such as for example on the drive head 17 next to the belt drive 27.

Preferably, a return valve (not shown) is integrated into the piston 7. The return valve preferably is configured to compensate negative pressure building up in the second (non-pressure) chamber 11 when the piston 7 moves towards the retracted position.

The brake actuator shown in figures 1 and 2 is part of a brake system 100 of a vehicle (not shown). The brake system 100 comprises a brake mechanism 101 which is operatively coupled to the brake actuator and actuated by the piston movement of the piston 7 in the direction of the stroke axis S. The brake mechanism 101 comprises a brake pad 102 which is subject to wear. In one preferred embodiment, the brake system 100 comprises a wear sensor 103 which is configured to monitor the wear status of the brake pad 102 and transmit a signal representative of the wear to an electronic control unit 105. Additionally or alternatively, the brake actuator 1 is configured to determine the maximum stroke of the piston 7 when actuated by the electric motor 3 and to transmit a signal representative of the maximum stroke length to the electronic control unit 105 in accordance with the preferred embodiments described herein above.

The electronic control unit 105 may use either of these signals, if both are present in the embodiment, or just one signal, whichever is present in the respective embodiment, to determine the need for replacement of the brake pad 102. Also, the electronic control unit 105 may adjust the control parameters for the electric motor 3 of the brake actuator 1 to compensate for increasing wear of the brake pad 102, e.g. by adjusting the extended position and retracted position of the piston 7. This way, it can be ensured that the piston 7 is extended far enough in order to create sufficient braking force even with a partially worn out brake pad. Likewise, it is possible to have the piston 7 retract only as far as is needed in view of the wear of the brake pad 7 such that slack between the brake pad and the corresponding counterpart, for example a brake disc, is kept at a minimum.

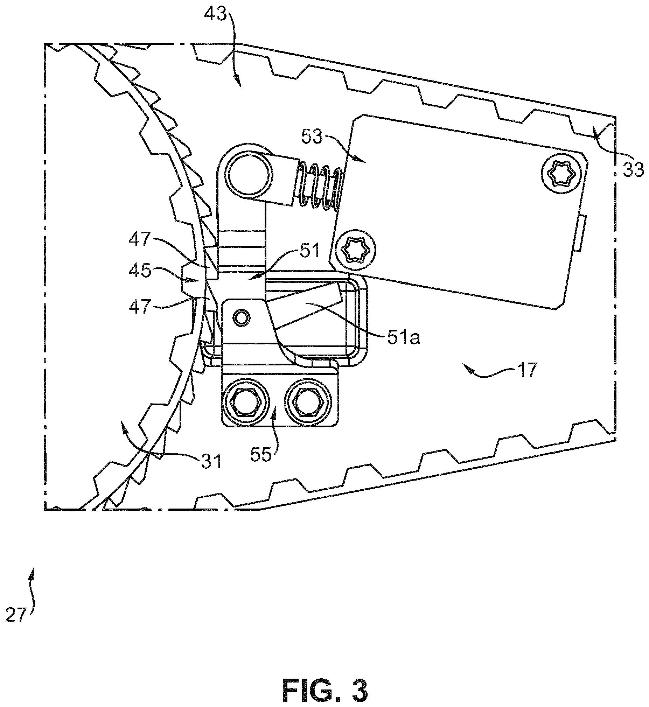

Figs. 3 to 5 show a locking unit 43 of the brake actuator 1. The tooth wheel 31 has at least one, and preferably a plurality of teeth 47 that are dedicated to providing a locking function for the belt drive 27. This is realized by trigger 51 that is pivotably mounted in the drive head 17 and held by a holder 55. Preferably, the trigger 51 comprises a visible pivot point. The trigger 51 is configured to rotate around the pivot point, and is preferably actuated by an electromagnetic actuator 53. The locking unit 43 prevents an unwanted backward rotation of spindle 21 (cf fig. 2) and tooth wheel 31 after parking force application. The trigger 51 is shown in a locked position in which it engages a recess 45 between two adjacent teeth 47.

When the driver wants to release the parking brake, the electromagnetic actuator 53 is actuated and the trigger 51 is moved from the locked position, preferably in outward direction away from tooth wheel 31, into a release position. Due to the reaction force of the brake and the force of the return spring 13, and particularly due to a non-self-locking thread of the spindle, the piston 7 through the nut 23 (cf. fig. 2) may rotate the gear in backward direction, until reaching the released position of the piston. This movement can also be (if needed, e.g. to speed up this process) assisted by backward rotation of the electric motor 3.

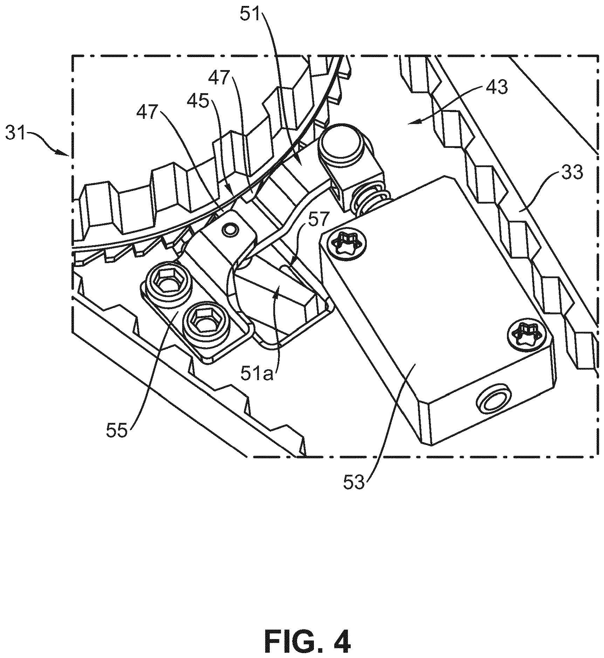

To mechanically release the parking brake, the trigger 51 is equipped with a latch (51a, fig.4) which can be pressed-in from the outside of the brake actuator 1 (using e.g. screwdriver or some other thin and long tool or rod) through an access hole 57 communicating with the outside of the drive head 17. This action generates a rotation of the trigger 51 in the same way as it was done by the electromagnetic actuator, but with mechanical (human) force instead of electricity.

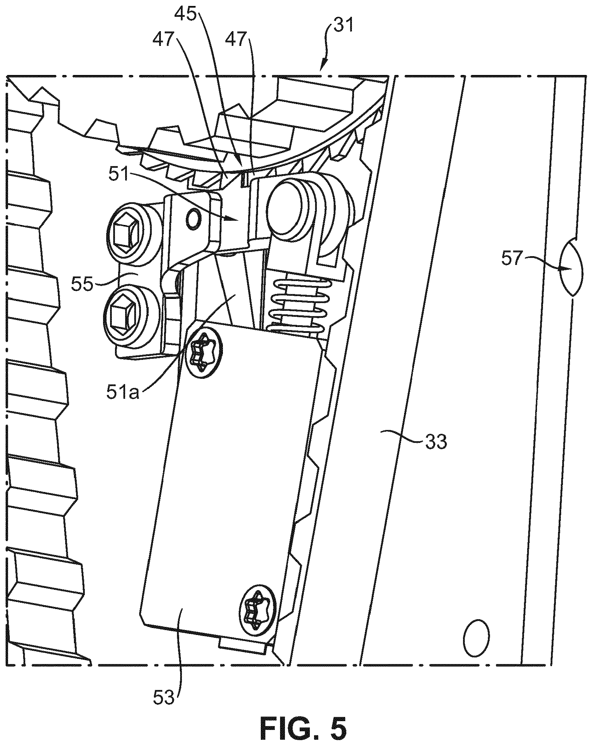

Fig. 5 shows the access hole 57 on the external surface of drive head 17. In regular truck usage this hole should be covered (by e.g. rubber plug) to prevent the contamination ingress into the gear mechanism, and removed if mechanical release action is necessary.

Overall, the figures of the preferred embodiment described herein above show a very compact design of an electric brake actuator which can serve multiple purposes, the parking brake function among others.

List of reference signs (part of description)
- 1: brake actuator
- 3: electric motor
- 5: housing
- 7: piston
- 8: inside wall, housing
- 9: first chamber (pressure chamber)
- 11: second chamber (non-pressure chamber)
- 13: return spring
- 15: bolt
- 17: drive head
- 19: screw drive
- 21: spindle
- 23: nut
- 25: guide element
- 27: belt drive
- 29: toothed pinion
- 31: toothed wheel
- 33: toothed belt
- 35: end face
- 37: seal
- 39: check valve
- 41: port
- 43: locking unit
- 45: recess
- 47: tooth
- 51: trigger
- 51a: latch
- 53: electromagnetic actuator
- 57: access hole
- 100: brake system
- 101: brake mechanism
- 102: brake pad
- 103: wear sensor
- 105: electronic control unit
- A: rotational axis, electric motor
- R: rotational axis, screw drive
- S: stroke axis
- α: angle

## Claims

1. A brake actuator (1) for a commercial vehicle, the brake actuator (1) comprising:
- a housing (5),
- a piston (7) that is movably mounted inside the housing (5) and configured to reciprocate along a stroke axis (S) between a retracted position and an extended position for applying and releasing a braking force to and from a brake mechanism (101) of the vehicle, and
- an electric motor (3) that is operatively coupled to the piston (7) and configured to move the piston (7) between the retracted and extended positions such as to apply and release the braking force wherein the electric motor (3) is coupled to a screw drive (19), and the screw drive (19) is coupled to the piston (7) and configured to transfer a rotational drive movement of the electric motor (3) into the movement of the piston (7) and wherein the screw drive (19) comprises a rotating element (21) and a nut (23), wherein the rotating element (21) and the nut (23) are in thread engagement and wherein the rotating element (21) is rotatably mounted in the housing (5), and the nut (23) is a running nut that is movably mounted to the rotating element (21) and rests against the piston (7) and wherein the piston (7) is slidably supported in the housing (5), configured to move along the stroke axis (S) and wherein a radially expandable sealing element (37) is positioned in the peripheral region of the piston (7), such that it sealingly abuts against an inside wall (8) of the housing (5) **characterized in that**
the piston (7) is configured to pivot from the stroke axis (S) within a predetermined angle (α) to account for lateral movements imposed by the externally mounted brake mechanism (101) and the nut (23) comprises an end face that faces the piston (7) and comprises a convexly shaped surface portion (25).

2. The brake actuator (1) of claim 1
wherein the rotating element (21) comprises a rotational axis (R) that is parallel to, and in particular coaxial with, the stroke axis (S) and the nut (23) is driven along the rotational axis (R) by rotation of the rotating element (21).

3. The brake actuator (1) of claim 1,
wherein the convexly shaped portion (25) has a cylindrical shape to facilitate planar pivoting movement of the piston (7), or
wherein the convexly shaped portion (25) has a spherical shape to facilitate three-dimensional pivoting movement of the piston (7).

4. The brake actuator (1) of any one of the preceding claims,
wherein the electric motor (3) is coupled to the screw drive (19) by one of:
a toothed gear drive,
a belt drive (27),
chain drive,
planetary gear,
worm gear, or
a combination of at least two thereof.

5. The brake actuator (1) of any one of claims 1 to 4,
comprising a number of guide elements (25) that are located in the housing (5), oriented parallel to the rotational axis (R) of the rotating element (21) and engage the nut (23) to prevent rotation of the nut (23).

6. The brake actuator (1) of any one of the preceding claims,
wherein the housing (5) comprises a first chamber (9), preferably a pressure chamber, and a second chamber (11), preferably a non-pressure chamber, wherein the first chamber (9) and the second chamber (11) are sealed against and separated from one another by the piston (7).

7. The brake actuator (1) of claim 6,
wherein the first chamber (9) of the housing (5) is a pressure chamber, and the second chamber (11) of the housing (5) is a non-pressure chamber.

8. The brake actuator (1) of claim 6 or 7
wherein the first chamber (9) comprises a port (41) for connecting the first chamber (9) to a pressure source.

9. The brake actuator (1) of claim 6 to 8,
comprising at least one of:
- a check valve (39) communicating with the second chamber (11) to reduce positive pressure inside the second chamber (11) when the piston (7) moves towards the extended position, or
- a return valve, preferably mounted to the piston (7), to compensate negative pressure building up inside the second chamber (11) when the piston (7) moves towards the retracted position.

10. A brake system (100) of a commercial vehicle, the brake system comprising
- a brake actuator (1) according to any one of the preceding claims, and
- a brake mechanism (101) operatively coupled to the brake actuator (1), and
- an electronic control unit (105) operatively coupled to the brake actuator (1).

11. The brake system (100) of claim 10,
wherein the electronic control unit (105) is configured to control the brake actuator (1) such that the electric motor (3) actuates the piston (7) when at least one of a parking brake function or a service brake function, is activated.

12. The brake system (100) of claim 10 or 11,
wherein the brake mechanism (101) comprises at least one brake pad (102) that is subject to wear, and
- a wear sensor (103) operatively coupled to the electronic control unit (105) and configured to measure the wear of the brake pad (102) and to provide a signal representative of the wear measurement,

13. The brake system (100) of any one of claims 10 to 12
wherein the piston (7) of the brake actuator (1) has a maximum stroke length that is defined by the retracted position and the extended position, and wherein the brake actuator (1) is configured to communicate to the electronic control unit (105) a signal representative of the maximum stroke length.

## Patentansprüche

1. Bremsenaktuator (1) für ein Nutzfahrzeug, wobei der Bremsenaktuator (1) Folgendes umfasst:
- ein Gehäuse (5),
- einen Kolben (7), der beweglich im Gehäuse (5) montiert und dazu ausgelegt ist, sich zum Aufbringen und Lösen einer Bremskraft auf einen bzw. von einem Bremsmechanismus (101) des Fahrzeugs entlang einer Hubachse (S) zwischen einer zurückgezogenen Position und einer ausgefahrenen Position hin und her zu bewegen, und
- einen Elektromotor (3), der an den Kolben (7) wirkgekoppelt und dazu ausgelegt ist, den Kolben (7) zwischen der zurückgezogenen und der ausgefahrenen Position zu bewegen, um die Bremskraft aufzubringen und zu lösen, wobei der Elektromotor (3) an einen Schneckenantrieb (19) gekoppelt ist und der Schneckenantrieb (19) an den Kolben (7) gekoppelt und dazu ausgelegt ist, eine Antriebsdrehbewegung des Elektromotors (3) in die Bewegung des Kolbens (7) zu übertragen, und wobei der Schneckenantrieb (19) ein Drehelement (21) und eine Mutter (23) umfasst, wobei das Drehelement (21) und die Mutter (23) in Gewindeeingriff sind und wobei das Drehelement (21) drehbar im Gehäuse (5) montiert ist, und die Mutter (23) eine Laufmutter ist, die drehbar im Drehelement (21) montiert ist und am Kolben (7) ruht und wobei der Kolben (7) gleitbar im Gehäuse (5) gestützt ist, dazu ausgelegt, sich entlang der Hubachse (S) zu bewegen, und wobei ein radial ausdehnbares Dichtungselement (37) im Umfangsbereich des Kolbens (7) positioniert ist, derart, dass es abdichtend an einer Innenwand (8) des Gehäuses (5) anliegt, **dadurch gekennzeichnet, dass**
der Kolben (7) dazu ausgelegt ist, innerhalb eines vorbestimmten Winkels (α) aus der Hubachse (S) zu schwenken, um Seitenbewegungen, die durch den außen montierten Bremsmechanismus (101) bewirkt werden, Rechnung zu tragen, und die Mutter (23) eine Endseite umfasst, die dem Kolben (7) zugewandt ist und einen konvex geformten Flächenabschnitt (25) umfasst.

2. Bremsenaktuator (1) nach Anspruch 1
wobei das Drehelement (21) eine Drehachse (R) umfasst, die parallel zur Hubachse (S) verläuft und insbesondere koaxial mit derselben ist, und die Mutter (23) durch Drehung des Drehelements (21) entlang der Drehachse (R) angetrieben wird.

3. Bremsenaktuator (1) nach Anspruch 1,
wobei der konvex geformte Abschnitt (25) eine zylindrische Form aufweist, um eine planare Schwenkbewegung des Kolbens (7) zu ermöglichen, oder
wobei der konvex geformte Abschnitt (25) eine Kugelform aufweist, um eine dreidimensionale Schwenkbewegung des Kolbens (7) zu ermöglichen.

4. Bremsenaktuator (1) nach einem der vorhergehenden Ansprüche,
wobei der Elektromotor (3) über eines von Folgendem an den Schneckenantrieb (19) gekoppelt ist:
einen Zahnradantrieb,
einen Riemenantrieb (27),
Kettenantrieb,
Planetenrad,
Schneckenrad, oder
eine Kombination von mindestens zwei davon.

5. Bremsenaktuator (1) nach einem der Ansprüche 1 bis 4,
der eine Anzahl von Führungselementen (25) umfasst, die sich im Gehäuse (5) befinden, parallel auf die Drehachse (R) des Drehelements (21) ausgerichtet sind und in die Mutter (23) eingreifen, um eine Drehung der Mutter (23) zu verhindern.

6. Bremsenaktuator (1) nach einem der vorhergehenden Ansprüche,
wobei das Gehäuse (5) eine erste Kammer (9), vorzugsweise eine Druckkammer, und eine zweite Kammer (11), vorzugsweise eine Nichtdruckkammer, umfasst, wobei die erste Kammer (9) und die zweite Kammer (11) durch den Kolben (7) gegeneinander abgedichtet und voneinander getrennt sind.

7. Bremsenaktuator (1) nach Anspruch 6,
wobei die erste Kammer (9) des Gehäuses (5) eine Druckkammer ist und die zweite Kammer (11) des Gehäuses (5) eine Nichtdruckkammer ist.

8. Bremsenaktuator (1) nach Anspruch 6 oder 7
wobei die erste Kammer (9) einen Anschluss (41) zum Verbinden der ersten Kammer (9) mit einer Druckquelle umfasst.

9. Bremsenaktuator (1) nach Anspruch 6 bis 8,
der mindestens eines von Folgendem umfasst:
- ein Sperrventil (39), das mit der zweiten Kammer (11) kommuniziert, um einen positiven Druck in der zweiten Kammer (11) zu reduzieren, wenn sich der Kolben (7) zur ausgefahrenen Position bewegt, oder
- ein Rückschlagventil, vorzugsweise am Kolben (7) montiert, zum Kompensieren eines negativen Drucks, der sich in der zweiten Kammer (11) aufbaut, wenn sich der Kolben (7) zur zurückgezogenen Position bewegt.

10. Bremssystem (100) eines Nutzfahrzeugs, wobei das Bremssystem Folgendes umfasst
- einen Bremsenaktuator (1) nach einem der vorhergehenden Ansprüche, und
- einen Bremsmechanismus (101), der an den Bremsenaktuator (1) wirkgekoppelt ist, und
- eine elektronische Steuereinheit (105), die an den Bremsenaktuator (1) wirkgekoppelt ist.

11. Bremssystem (100) nach Anspruch 10,
wobei die elektronische Steuereinheit (105) dazu ausgelegt ist, den Bremsenaktuator (1) derart zu steuern, dass der Elektromotor (3) den Kolben (7) betätigt, wenn mindestens eines von einer Parkbremsfunktion oder einer Betriebsbremsfunktion aktiviert wird.

12. Bremssystem (100) nach Anspruch 10 oder 11,
wobei der Bremsmechanismus (101) mindestens einen Bremsbelag (102) umfasst, der einem Verschleiß unterliegt, und
- einen Verschleißsensor (103), der an die elektronische Steuereinheit (105) wirkgekoppelt und dazu ausgelegt ist, den Verschleiß des Bremsbelags (102) zu messen und ein Signal, das die Verschleißmessung repräsentiert, bereitzustellen.

13. Bremssystem (100) nach einem der Ansprüche 10 bis 12
wobei der Kolben (7) des Bremsenaktuators (1) eine maximale Hublänge aufweist, die durch die zurückgezogene Position und die ausgefahrene Position definiert wird, und wobei der Bremsenaktuator (1) dazu ausgelegt ist, ein Signal, das die maximale Hublänge repräsentiert, zur elektronischen Steuereinheit (105) zu kommunizieren.

## Revendications

1. Actionneur de frein (1) pour un véhicule utilitaire, l'actionneur de frein (1) comprenant :
- un logement (5),
- un piston (7) qui est monté de manière mobile à l'intérieur du logement (5) et configuré pour aller et venir le long d'un axe de course (S) entre une position rétractée et une position en extension pour appliquer et relâcher une force de freinage vers et à partir d'un mécanisme de freinage (101) du véhicule, et
- un moteur électrique (3) qui est couplé de manière fonctionnelle au piston (7) et configuré pour déplacer le piston (7) entre les positions rétractée et en extension de manière à appliquer et à relâcher la force de freinage, dans lequel
le moteur électrique (3) est couplé à un entraînement à vis (19), et l'entraînement à vis (19) est couplé au piston (7) et configuré pour transférer un mouvement d'entraînement rotatif du moteur électrique (3) en mouvement du piston (7), et dans lequel l'entraînement à vis (19) comprend un élément rotatif (21) et un écrou (23), dans lequel l'élément rotatif (21) et l'écrou (23) sont mis en prise par filetage, et dans lequel l'élément rotatif (21) est monté en rotation dans le logement (5), et l'écrou (23) est un écrou de roulement qui est monté de manière mobile sur l'élément rotatif (21) et repose contre le piston (7), et dans lequel le piston (7) est supporté de manière coulissante dans le logement (5), configuré pour se déplacer le long de l'axe de course (S), et dans lequel un élément d'étanchéité radialement expansible (37) est positionné dans la région périphérique du piston (7), de sorte à venir en butée de manière étanche contre une paroi intérieure (8) du logement (5), **caractérisé en ce que**
le piston (7) est configuré pour pivoter par rapport à l'axe de course (S) dans un angle prédéterminé (α) pour tenir compte de mouvements latéraux imposés par le mécanisme de freinage (101) monté en externe, et l'écrou (23) comprend une face d'extrémité qui fait face au piston (7) et comprend une partie de surface de forme convexe (25).

2. Actionneur de frein (1) de la revendication 1,
dans lequel l'élément rotatif (21) comprend un axe de rotation (R) qui est parallèle à, et en particulier coaxial avec, l'axe de course (S), et l'écrou (23) est entraîné le long de l'axe de rotation (R) par la rotation de l'élément rotatif (21).

3. Actionneur de frein (1) de la revendication 1,
dans lequel la partie de forme convexe (25) a une forme cylindrique pour faciliter un mouvement de pivotement plan du piston (7), ou
dans lequel la partie de forme convexe (25) a une forme sphérique pour faciliter un mouvement de pivotement tridimensionnel du piston (7).

4. Actionneur de frein (1) de l'une quelconque des revendications précédentes,
dans lequel le moteur électrique (3) est couplé à l'entraînement à vis (19) par l'un parmi :
un entraînement par engrenage denté,
un entraînement par courroie (27),
un entraînement par chaîne,
un engrenage planétaire,
un engrenage à vis sans fin, ou
une combinaison d'au moins deux de ceux-ci.

5. Actionneur de frein (1) de l'une quelconque des revendications 1 à 4,
comprenant un certain nombre d'éléments de guidage (25) qui sont situés dans le logement (5), orientés parallèlement à l'axe de rotation (R) de l'élément rotatif (21) et mettent en prise l'écrou (23) pour empêcher la rotation de l'écrou (23).

6. Actionneur de frein (1) de l'une quelconque des revendications précédentes,
dans lequel le logement (5) comprend une première chambre (9), de préférence une chambre de pression, et une deuxième chambre (11), de préférence une chambre sans pression, dans lequel la première chambre (9) et la deuxième chambre (11) sont scellées l'une contre l'autre et séparées l'une de l'autre par le piston (7).

7. Actionneur de frein (1) de la revendication 6,
dans lequel la première chambre (9) du logement (5) est une chambre de pression, et la deuxième chambre (11) du logement (5) est une chambre sans pression.

8. Actionneur de frein (1) de la revendication 6 ou 7, dans lequel la première chambre (9) comprend un orifice (41) pour connecter la première chambre (9) à une source de pression.

9. Actionneur de frein (1) de la revendication 6 à 8, comprenant au moins l'une parmi :
- une soupape anti-retour (39) communiquant avec la deuxième chambre (11) pour réduire la pression positive à l'intérieur de la deuxième chambre (11) lorsque le piston (7) se déplace vers la position en extension, ou
- une soupape de retour, de préférence montée sur le piston (7), pour compenser la pression négative qui se forme à l'intérieur de la deuxième chambre (11) lorsque le piston (7) se déplace vers la position rétractée.

10. Système de freinage (100) d'un véhicule utilitaire, le système de freinage comprenant
- un actionneur de frein (1) selon l'une quelconque des revendications précédentes, et
- un mécanisme de freinage (101) couplé de manière fonctionnelle à l'actionneur de frein (1), et
- une unité de commande électronique (105) couplée de manière fonctionnelle à l'actionneur de frein (1).

11. Système de freinage (100) de la revendication 10, dans lequel l'unité de commande électronique (105) est configurée pour commander l'actionneur de frein (1) de sorte que le moteur électrique (3) actionne le piston (7) lorsqu'au moins l'une parmi une fonction de frein de stationnement ou une fonction de frein de service, est activée.

12. Système de freinage (100) de la revendication 10 ou 11,
dans lequel le mécanisme de freinage (101) comprend au moins une plaquette de frein (102) qui est soumise à l'usure, et
- un capteur d'usure (103) couplé de manière fonctionnelle à l'unité de commande électronique (105) et configuré pour mesurer l'usure de la plaquette de frein (102) et pour fournir un signal représentatif de la mesure d'usure.

13. Système de freinage (100) de l'une quelconque des revendications 10 à 12,
dans lequel le piston (7) de l'actionneur de frein (1) a une longueur de course maximale qui est définie par la position rétractée et la position en extension, et dans lequel l'actionneur de frein (1) est configuré pour communiquer à l'unité de commande électronique (105) un signal représentatif de la longueur de course maximale.
